# FASCICULE DE BREVET EUROPEEN

(11) **EP 2 536 320 B1**
(45) Date de publication et mention de la délivrance du brevet: **02.07.2014**
(21) Numéro de dépôt: 11708545.6
(22) Date de dépôt: 10.02.2011
(51) Int. Cl.: A47J 37/04

(54) **APPAREIL DOMESTIQUE POUR LA CUISSON VERTICALE D'UN ALIMENT, PAR EXEMPLE DE LA VIANDE POUR KEBAB**
HAUSHALTSGERÄT FÜR VERTIKALES GAREN VON SPEISEN, ZUM BEISPIEL KEBABFLEISCH
DOMESTIC APPLIANCE FOR THE VERTICAL COOKING OF A FOODSTUFF, FOR EXAMPLE KEBAB MEAT

(30) Priorité: 15.02.2010 FR 1051022
(43) Date de publication de la demande: 26.12.2012
(73) Titulaire: L'Eclipse, 72400 La Chapelle-du-Bois (FR)
(72) Inventeur: OGER, Marc, 72400 La Chapelle-du-Bois (FR); BARRE, Pascal, 49440 Cande (FR); FORGE, Didier, 41170 Choue (FR); PRIOLLAUD-SAVEY, François, 72000 Mans (FR)
(74) Mandataire: De Souza, Paula
(86) Numéro de dépôt international: PCT/FR2011/050281
(87) Numéro de publication internationale: WO 2011/098733

(56) Documents cités:
- DE-U1- 29 615 432
- US-A- 6 047 633

## Description

La présente invention concerne un appareil domestique pour la cuisson verticale d'un aliment, par exemple de la viande pour Kebab, comportant un châssis externe de protection, une source de chaleur s'étendant verticalement le long et à l'intérieur du châssis de protection lorsque l'appareil est posé à plat sur une surface de travail, un plateau inférieur mobile au moins en rotation selon un axe parallèle à la source de chaleur, et un support tubulaire vertical de nourriture. Le document US 6 047 633 décrit un tel appareil.

Actuellement, dans le domaine de la restauration à emporter, il existe un type d'aliment exotique très prisé qui est cuit sur un appareil de cuisson à broche verticale. Pour cela, on utilise un appareil de cuisson à broche verticale sur laquelle est embroché l'aliment à griller, par exemple de la viande pour Kébab, la broche tournant verticalement sur elle-même pour présenter la viande devant une résistance définissant en général une portion de cylindre.

Cette restauration rapide, pratique, et peu coûteuse constitue un repas complet avec des saveurs orientales très appréciées. La viande, souvent servi dans un « sandwich grec », est accompagnée de salade, tomates, oignons finement hachés, de sauce blanche aux herbes, d'harissa, de ketchup, ou encore de moutarde. Servis avec des frites, ces sandwichs sont aussi très nourrissants mais peuvent rester diététiques (cuisson sans matière grasse). Les viandes de base sont généralement de la poitrine d'agneau, de veau, ou de boeuf, macérée dans un jus à base de lait et d'épices. Ce plat fait concurrence aux sandwiches américains et autres pizzas, viennoiseries ou croissanteries. Bien entendu, d'autres recettes sont possibles, par exemple à base de volaille, de poisson, de fromage ou de légumes.

Cependant, ces appareils de cuisson présentent des inconvénients principalement concernant leur hygiène de fonctionnement.

En effet, en raison du poids important de l'aliment enfilé sur la broche, parfois plusieurs kilos, le produit peut rester toute une journée à l'air libre et donc être soumis à diverses agressions extérieures (bactéries, microbes, moisissures, poussières, changement important de température selon si le moyen de chauffage est éteint ou allumé). De plus, le produit, notamment quand il s'agit de viande, étant réutilisé jusqu'à ce que la broche soit quasiment vide, celui-ci peut là encore être soumis à des agressions extérieure ou des changements de température qui peuvent altérer ses qualité organoleptiques, et poser des problèmes d'hygiène, de conservation et de cuisson/recuisson.

Par ailleurs, la broche est réutilisée à chaque nouvelle « recharge d'aliment. Si cette broche est mal nettoyée, des bactéries, microbes ou moisissures qui se sont développées sur un premier chargement d'aliment peuvent se déposer sur la recharge suivante par contamination.

Un but de la présente invention est donc de résoudre les problèmes cités précédemment, à l'aide d'une solution simple à fabriquer, peu coûteuse, facile à utiliser et présentant surtout des conditions d'hygiène optimales.

Ainsi, la présente invention a pour objet un appareil domestique pour la cuisson verticale d'un aliment, par exemple de la viande pour Kebab, comportant :
- un châssis externe de protection,
- une source de chaleur s'étendant verticalement le long et à l'intérieur du châssis de protection lorsque l'appareil est posé à plat sur une surface de travail,
- un plateau inférieur mobile au moins en rotation selon un axe parallèle à la source de chaleur,
- un support tubulaire vertical de cuisson autour duquel un aliment à réchauffer/cuire/griller est placé, le support de cuisson et le plateau inférieur comportant respectivement des moyens de fixation,
caractérisé en ce que lesdits moyens de fixation sont adaptés pour être détruits de manière irréversible après leur première utilisation lors de la désolidarisation du support et du plateau, de sorte que le support de cuisson est à usage unique et n'est positionnable qu'une seule fois sur le plateau inférieur.

Selon des modes de réalisation préférés, l'appareil de cuisson verticale conforme à la présente invention comprend l'une au moins des caractéristiques suivantes :
- le support de cuisson est constitué par un tube cylindrique formant une broche rotative ;
- les moyens de fixation comportent au moins une zone sécable adaptée pour séparer de manière définitive certains au moins desdits moyens de fixation lors de la première désolidarisation entre le support de cuisson et le plateau inférieur, par exemple par torsion, traction, compression, flexion ou toute autre force ;
- les moyens de fixation sont constitués par :
   * une tige liée à une extrémité de fixation du support de cuisson et dans le prolongement axial de ce dernier, ladite tige comportant une âme centrale et deux pattes parallèles articulées sur l'extrémité libre de ladite âme pour pouvoir s'éloigner ou se rapprocher de cette dernière et former un tube, chaque patte étant pourvue de protubérances radiales de clipage,
   * un manchon de réception lié au plateau inférieur et présentant une fente et deux bras sensiblement élastiques radialement définissant une ouverture de réception de l'âme et des pattes de la tige, lesdits bras présentant intérieurement une gorge circulaire coopérant avec les protubérances des pattes d'assurer la liaison du support de cuisson au plateau inférieur pour l'utilisation de l'appareil, et
   * la tige présentant une zone sécable permettant de désolidariser de manière définitive les pattes articulées d'une partie de l'âme de la tige, par exemple par torsion et/ou traction de la tige du support de cuisson par rapport au manchon du plateau inférieur ;
- les moyens de fixation sont constitués par :
   * une collerette annulaire creuse disposée à une extrémité de fixation du support de cuisson et dans le prolongement axial de ce dernier, ladite collerette comportant une succession de lamelles radialement élastiques disposées le long de sa circonférence,
   * une tête de fixation liée au plateau inférieur, ladite tête présentant une forme bombée ayant un diamètre externe sensiblement égal au diamètre interne de la collerette lorsque les lamelles sont écartées de manière à coopérer avec ces dernières afin d'assurer la liaison du support de cuisson au plateau inférieur pour l'utilisation de l'appareil, et
   * la collerette présentant une zone sécable et comportant une languette d'arrachage permettant de désolidariser de manière définitive le support de cuisson du plateau inférieur par rupture desdites lamelles le long de la zone sécable en tirant sur ladite languette ;
- les moyens de fixation sont constitués par :
   * un manchon tubulaire lié, par exemple par vissage ou sertissage, à une extrémité de fixation du support de cuisson et comportant deux pattes parallèles élastiques et délimitant entre elles un espace,
   * une tête de fixation liée au plateau inférieur et comportant une protubérance de forme complémentaire de l'espace défini entre les pattes de manière à coopérer avec ce dernier afin assurer la liaison du support de cuisson au plateau inférieur pour l'utilisation de l'appareil, et
   * chaque patte comportant au moins une zone sécable permettant de désolidariser de manière définitive le support de cuisson du plateau inférieur par rupture desdites pattes le long de la zone sécable, par exemple par torsion du manchon tubulaire par rapport à la tête de fixation ;
- les moyens de fixation sont constitués par :
   * une collerette cylindrique creuse disposée à une extrémité de fixation du support de cuisson et dans le prolongement de ce dernier, ladite collerette comportant une succession de lamelles radialement élastiques disposées le long de sa circonférence,
   * une tête de fixation liée au plateau inférieur, ladite tête présentant une forme bombée ayant un diamètre externe sensiblement égal au diamètre interne de la collerette lorsque les lamelles sont écartées de manière à coopérer avec ces dernières afin d'assurer la liaison du support de cuisson au plateau inférieur pour l'utilisation de l'appareil, et
      * chaque lamelle de la collerette étant montée entre deux pattes fixes, au niveau d'une zone sécable permettant de désolidariser de manière définitive le support de cuisson du plateau inférieur par rupture des lamelles le long de ladite zone sécable, par exemple par traction ou flexion ;
- les moyens de fixation sont constitués par :
   * une collerette cylindrique creuse disposée à une extrémité de fixation du support de cuisson et dans le prolongement de ce dernier, ladite collerette comportant une succession de lamelles radialement élastiques disposées le long de sa circonférence et, intérieurement, un filetage,
   * une tête de fixation liée au plateau inférieur, ladite tête présentant un pas de vis coopérant avec le filetage interne de la collerette afin d'assurer la liaison du support de cuisson au plateau inférieur pour l'utilisation de l'appareil, et
   * certaines au moins des lamelles présentant une zone sécable permettant de désolidariser de manière définitive le support de cuisson du plateau inférieur par rupture desdites lamelles le long de la zone sécable, par exemple par traction ou flexion ;
- les moyens de fixation sont constitués par :
   * une bague liée à une extrémité de fixation du support de cuisson et comportant un filetage interne,
   * une tête de fixation liée au plateau inférieur et comportant un pas de vis coopérant avec le filetage de la bague afin d'assurer la liaison du support de cuisson au plateau inférieur pour l'utilisation de l'appareil, et
   * la bague présentant une zone sécable et comportant une languette d'arrachage permettant de désolidariser de manière définitive le support de cuisson du plateau inférieur par arrachage de ladite bague le long de la zone sécable en tirant sur ladite languette ;
- le plateau inférieur est également mobile en translation par rapport à la source de chaleur pour le rapprocher ou l'éloigner de cette dernière, avant la cuisson et/ou pendant la cuisson de l'aliment ;
- l'appareil comporte en outre un plateau rotatif supérieur relié au support de cuisson et mobile en rotation simultanément avec ce dernier et le plateau inférieur, ledit plateau supérieur étant adapté pour recevoir des brochettes verticales ; et
- la source de chaleur est une résistance électrique courbe décrivant au moins un arc de 90° autour du support de cuisson et à puissance variable selon le type d'aliment à réchauffer/cuire/griller.

La présente invention se rapporte également à un Support tubulaire pour appareil de cuisson verticale, en particulier tel que décrit précédemment, comportant des moyens de fixation à un plateau dudit appareil de cuisson, caractérisé en ce que lesdits moyens de fixation sont destructible après première utilisation rendant ledit support utilisable une seule fois et non repositionnable sur ledit plateau.

Avantageusement, ledit support est entouré d'un aliment placé sous vide, en particulier de viande pour Kébab, de volaille, de poisson, de légumes ou encore de fromage, de manière à constituer une recharge consommable prête à être utilisée et pesant par exemple plusieurs centaines de grammes.

L'invention va maintenant être décrite plus en détail en référence à des modes de réalisation particuliers donnés à titre d'illustration uniquement et représentés sur les figures annexées dans lesquelles :
- La figure 1 est une vue de face d'un appareil domestique de cuisson verticale d'aliment conforme à la présente invention ;
- La figure 2 est une vue en coupe selon la ligne AA de la figure 1 ;
- Les figures 3 à 7 sont des vues illustrant un premier mode de réalisation d'un support d'aliment conforme à la présente invention ;
- Les figures 8 à 11 sont des vues illustrant un deuxième mode de réalisation du support ;
- Les figures 12 à 16 sont des vues illustrant un troisième mode de réalisation du support ;
- Les figures 17 à 21 sont des vues illustrant un quatrième mode de réalisation du support ;
- Les figures 22 à 26 sont des vues illustrant un cinquième mode de réalisation du support ;
- Les figures 27 à 30 sont des vues illustrant un sixième mode de réalisation du support ;
- Les figures 31 à 33 sont des vues illustrant un septième mode de réalisation du support ;
- Les figures 34 à 37 sont des vues illustrant un huitième mode de réalisation du support ; et
- La figure 38 est une vue en perspective d'une variante de réalisation de la figure 1.

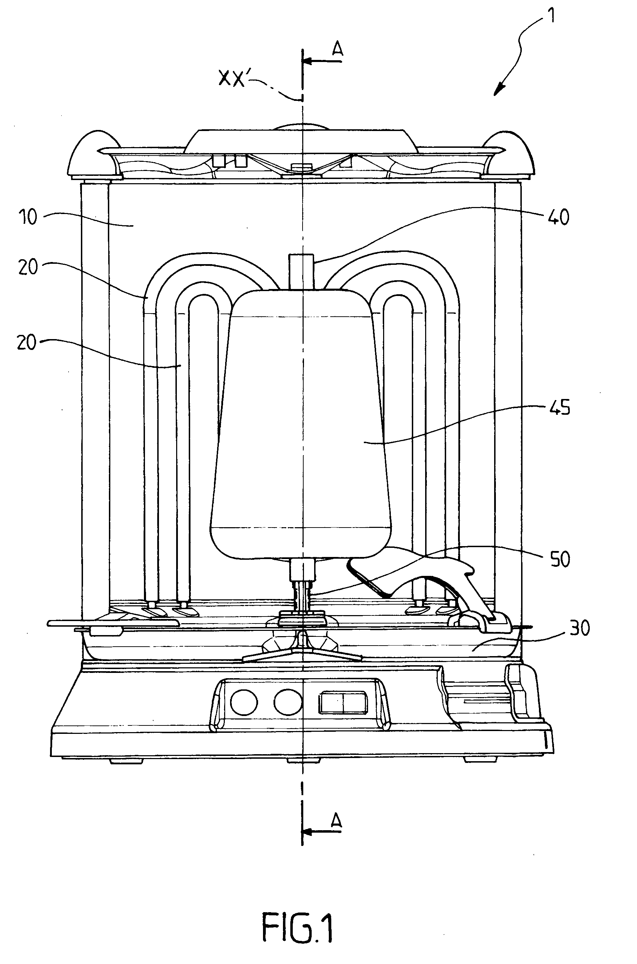

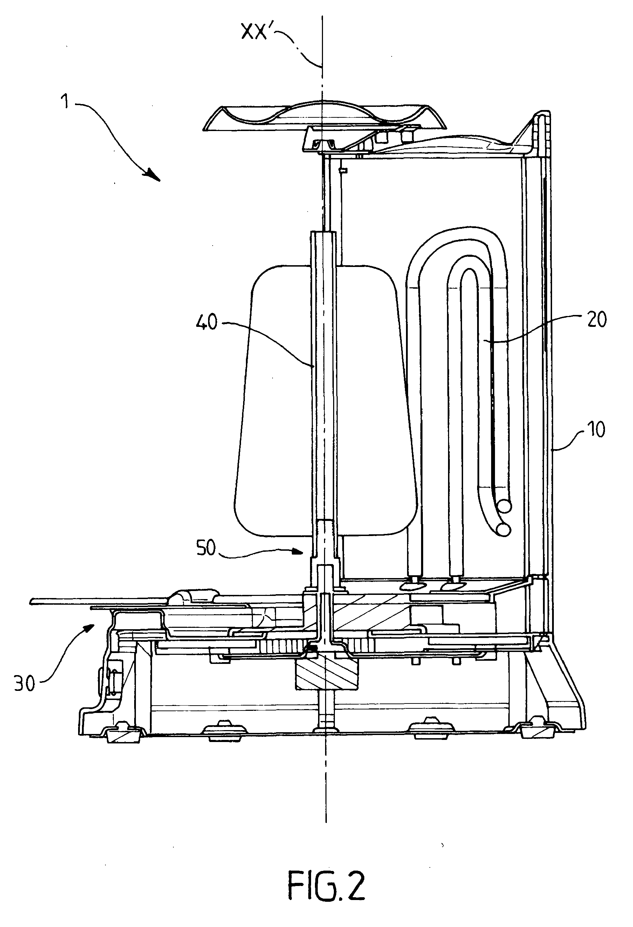

Les figures 1 et 2 représentent un premier mode de réalisation d'un appareil domestique de cuisson verticale 1 conforme à la présente invention.

Cet appareil, adapté pour la cuisson verticale d'aliments tels que de la viande à Kébab, du poisson, du fromage ou des légumes, comporte principalement un châssis externe de protection 10 décrivant une portion verticale de cylindre quand l'appareil est posé à plat pour son utilisation, typiquement entre 90° et 180°, une résistance électrique 20 épousant la forme intérieure du châssis et s'étendant verticalement le long de ce dernier, un plateau inférieur 30 mobile en rotation selon un axe XX' parallèle à la résistance 20 et un support tubulaire de cuisson 40, et des moyens 50 de fixation du support de cuisson 40 sur le plateau inférieur 30. Avantageusement, la résistance décrit sensiblement le même arc que le châssis externe, c'est-à-dire entre 90° et 180°, et se présente sous la forme d'un ou plusieurs serpentins.

Le plateau inférieur 30, motorisé, et donc le support tubulaire 40 qui lui est lié, tournent selon l'axe principal vertical XX' de sorte que l'aliment 45 emmanché sur le support 40, par exemple de la viande à Kébab, est grillé petit à petit et de manière homogène sur tout son pourtour en passant devant la résistance électrique 20.

Afin de garantir la meilleure hygiène possible pour les utilisateurs de cet appareil familial, l'aliment 45 à griller, qu'il s'agisse de viande, de poisson, de fromage ou de légumes, est pré emmanché sur le support vertical de cuisson 40 formant une broche, l'ensemble unitaire ainsi créé formant une recharge vendue par de préférence sous vide, support compris, dans un réseau de distribution type supermarché ou hyper marché.

Ainsi, des portions individuelles « familiales » préparées à l'avance de plusieurs centaines de grammes, typiquement moins de deux kilogrammes et de manière préférée entre 600 et 1200 grammes, peuvent être vendues de manière très simple, avec une grande variété de produits, et une garantie de fraicheur et d'hygiène. Le client possédant l'appareil doit ensuite juste à positionner et fixer le support 40 sur le plateau 30 à l'aide des moyens de fixation destructibles 50 prévus à cet effet afin de consommer l'aliment 45 et le griller/cuire comme cela se ferait dans un restaurant vendant habituellement ce type de produit. Cet appareil est donc non seulement convivial mais il permet également d'apporter un confort de consommation notable en raison de son côté très hygiénique.

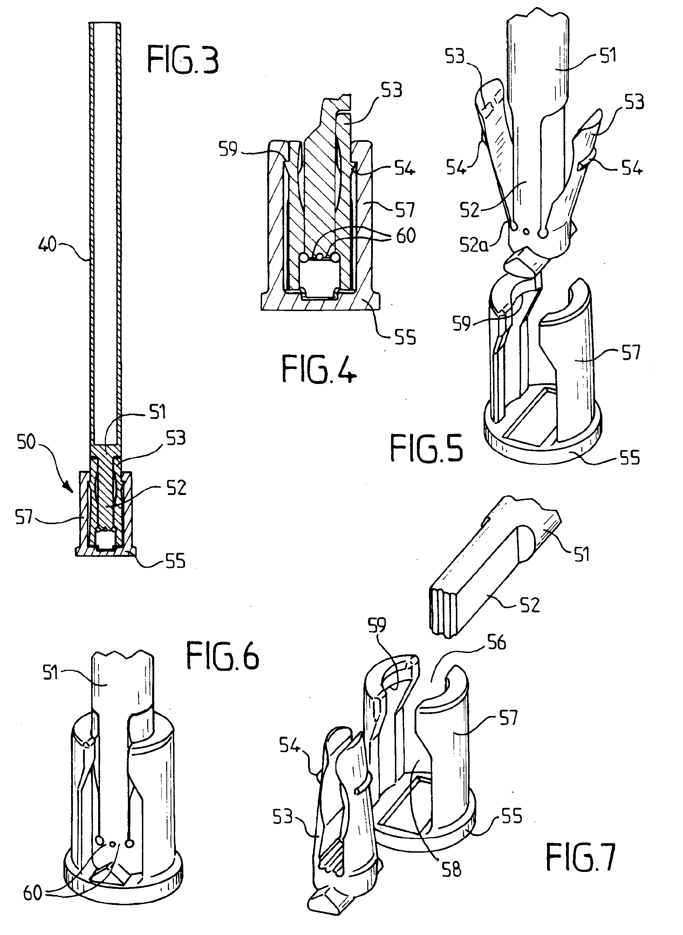

En effet, étant donné la conception particulière du support 40 et du plateau 30 faisant l'objet de la présente invention, une fois l'aliment 45 consommé, le support 40 ne peut plus jamais être réutilisé car le fait de détacher ce dernier du plateau provoque la destruction de manière irréversible des moyens de fixation 50, comme cela est décrit ci-après en relation avec les figures 3 à 37.

A cet effet, les moyens de fixation destructibles 50 comportent au moins une zone sécable adaptée pour séparer de manière définitive ces derniers lors de la première désolidarisation entre le support de cuisson et le plateau inférieur, par exemple par torsion, traction, compression, flexion ou toute autre force.

Ainsi, les figures 3 à 7 illustrent un premier mode de réalisation des moyens de fixation destructibles 50. Ces moyens comportent plus précisément :
- une tige 51 liée à une extrémité de fixation du support de cuisson 40 et dans le prolongement axial de ce dernier, ladite tige 51 comportant une âme centrale 52 et deux pattes parallèles 53 articulées sur l'extrémité libre 52a de ladite âme 52 pour pouvoir s'éloigner ou se rapprocher de cette dernière et former un tube, chaque patte 53 étant pourvue de protubérances radiales de clipage 54, et
- un manchon de réception 55 lié au plateau inférieur 30 et présentant une fente 56 et deux bras 57 sensiblement élastiques radialement définissant une ouverture 58 de réception du tube de la tige 51, lesdits bras 57 présentant intérieurement une gorge circulaire 59 coopérant avec les protubérances 54 des pattes 53 afin d'assurer la liaison du support de cuisson 40 au plateau inférieur 30 pour l'utilisation de l'appareil 1, et

Selon la présente invention, la tige 51 présente une zone sécable 60 permettant de désolidariser de manière définitive les pattes articulées 53 d'une partie de l'âme 52 de la tige 51, par exemple par torsion et/ou traction de la tige 51 du support de cuisson 40 par rapport au manchon 56 du plateau inférieur 30.

Ainsi, lors de la mise en place du support de cuisson 40 sur le plateau inférieur 30 (figures 3, 4 et 6), les pattes 53 sont repliées longitudinalement contre l'âme 52 de la tige 51, et la gorge 59 reçoit les protubérances de clipage 54 de sorte que la rotation du plateau inférieur 30 entraîne celle du support de cuisson 40.

Lors de la désolidarisation du support 40 et du plateau 30 (figure 7) une fois l'aliment consommé, l'âme 52 de la tige 51 se casse sensiblement au niveau de la zone de fixation/articulation des pattes 53 sur ladite âme 52, c'est-à-dire au niveau de la zone sécable 60, le manchon 55 restant intacte pour recevoir une nouvelle « recharge », c'est-à-dire un nouveau support garni d'un aliment à griller. Un même support de cuisson 30 ne sert donc jamais plus d'une fois.

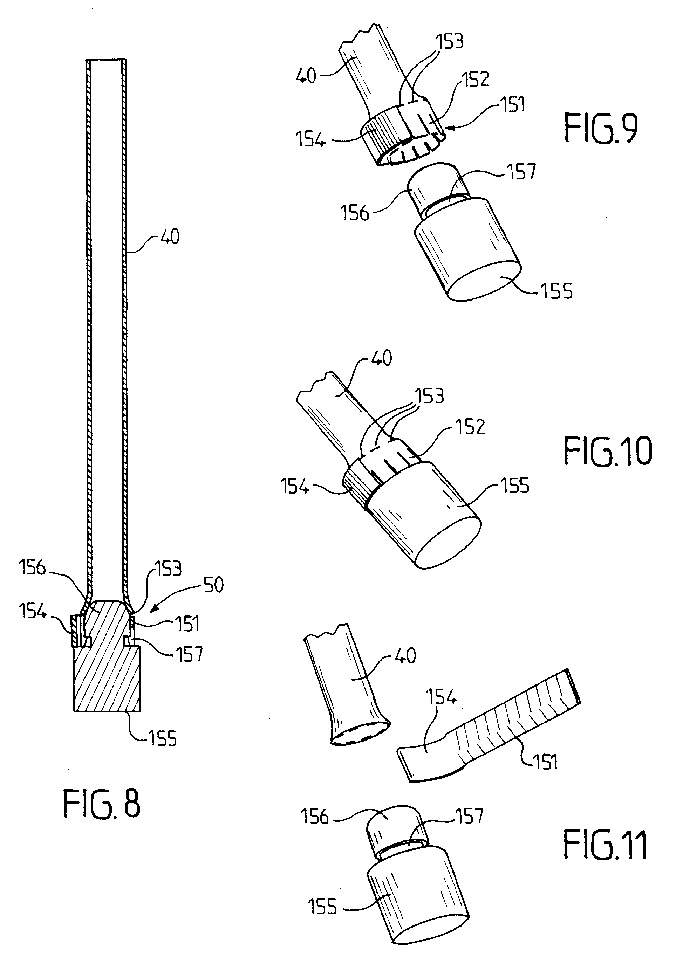

Les figures 8 à 11 illustrent un deuxième mode de réalisation des moyens de fixation destructibles 50. Ces moyens comportent plus précisément :
- une collerette annulaire creuse 151 disposée à une extrémité de fixation du support de cuisson 40 et dans le prolongement axial de ce dernier, ladite collerette 151 comportant une succession de lamelles fendues 152 radialement élastiques disposées le long de sa circonférence, et
- une tête de fixation 155 liée au plateau inférieur, ladite tête présentant une forme bombée 156 ayant un diamètre externe sensiblement égal au diamètre interne de la collerette 151 lorsque les lamelles 152 sont écartées de manière et une gorge 157 coopérant avec les extrémités libres des lamelles 152 afin d'assurer la liaison du support de cuisson 40 au plateau inférieur 30 pour l'utilisation de l'appareil (figures 8 et 10).

Avantageusement, la collerette 151 présente une zone sécable 153, sous la forme d'une suite de coupure réalisées dans la matière à la manière de pointillés, et comporte une languette d'arrachage 154 permettant de désolidariser de manière définitive le support de cuisson 40 du plateau inférieur 30 par rupture desdites lamelles 152 le long de la zone sécable 153 en tirant sur la languette 154.

Comme précédemment le support de cuisson 40 devient inutilisable après sa première utilisation une fois la collerette 151 arrachée (figure 11).

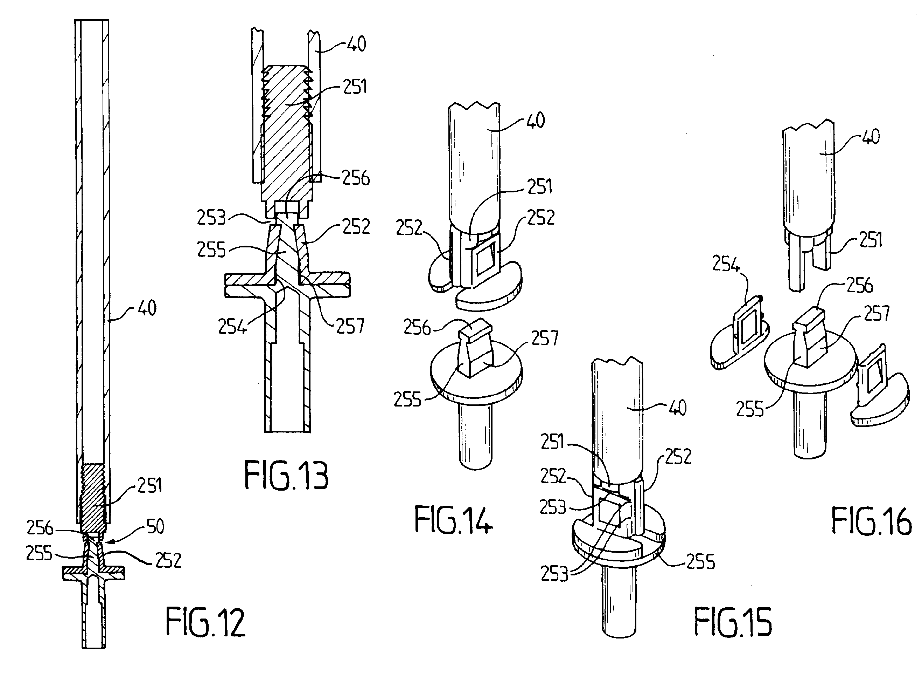

Les figures 12 à 16 illustrent un troisième mode de réalisation des moyens de fixation destructibles 50. Ces moyens comportent plus précisément un manchon tubulaire 251 lié, par exemple par vissage, à une extrémité creuse de fixation du support de cuisson 40 munie intérieurement d'un taraudage. Ce manchon 251 est muni de deux pattes parallèles élastiques 252 comportant chacune au moins une zone sécable 253. Les moyens de fixation destructibles 50 comportent également une tête de fixation 255 solidaire du plateau inférieur 30 et comportant une protubérance de 256 de forme complémentaire de l'espace défini entre les pattes 252. La tête 255 présente également des surfaces parallèles 257 d'appui coopérant avec des surfaces internes de blocage 54 prévues sur les pattes 252 de manière à coopérer avec ce dernier afin assurer la liaison du support de cuisson au plateau inférieur pour l'utilisation de l'appareil.

Ainsi, en position montée (figures 12, 13 et 15), les pattes 252 entourent la tête de fixation 255 et se bloque en translation axiale et en rotation grâce à la protubérance 256 et aux surfaces plates 254 et 257. De cette façon, le support 40 est solidaire du plateau 30 et peut être entraîné en rotation par ce dernier pour griller l'aliment 45.

Une fois l'aliment consommé (figure 16), l'utilisateur brise les pattes 252 au niveau de leurs zones de rupture 253 respectives, soit en tournant suffisamment fort le support 40 par rapport au plateau 30, soit par basculement du support en l'inclinant fortement par rapport à l'axe XX'. Ainsi, le support de cuisson 40 est désolidarisé de manière définitive du plateau inférieur 30 et ne peut plus être réutilisé. Bien entendu, la tête 255 reste intacte pour accueillir un nouveau support 40 muni de son aliment emmanché.

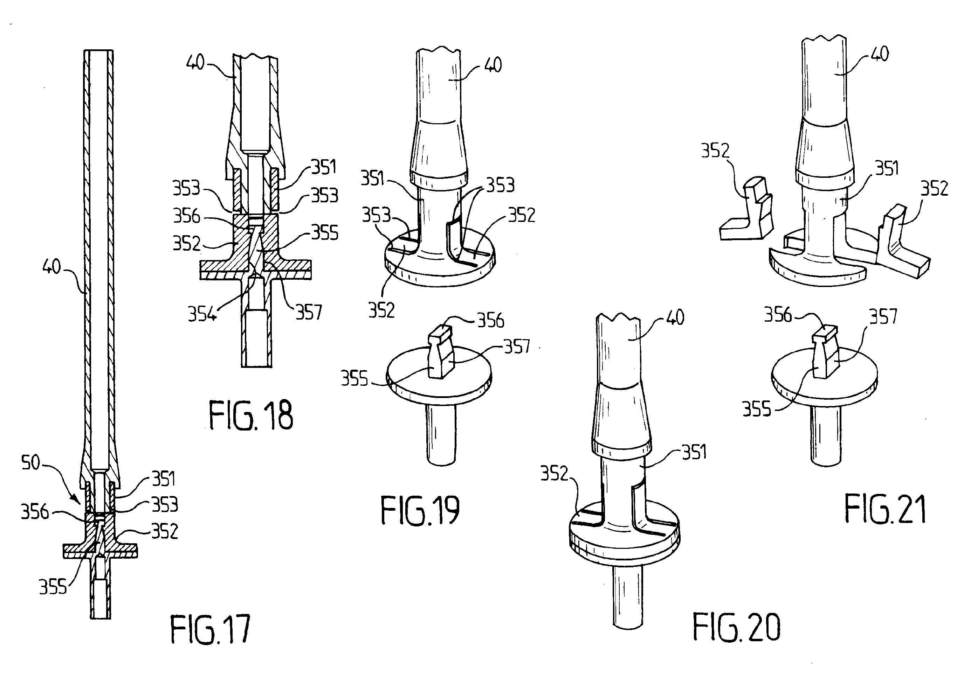

Les figures 17 à 21 illustrent un quatrième mode de réalisation des moyens de fixation destructibles 50 assez proche de celui des figures 12 à 16. En effet, ces moyens comportent plus précisément un manchon 351 monté par sertissage à l'extrémité du support de cuisson 40 et muni de deux pattes parallèles élastiques 352 comportant chacune au moins une zone sécable 353, de préférence trois zones sécables par patte 352 dans le cas présent. Les moyens de fixation destructibles 50 comportent également une tête de fixation 355 solidaire du plateau inférieur 30 et comportant une protubérance de 356 de forme complémentaire de l'espace défini entre les pattes 352 de manière à coopérer avec ce dernier afin assurer la liaison du support de cuisson 40 au plateau inférieur 30 pour l'utilisation de l'appareil

Ainsi, en position montée (figures 17, 18 et 20), les pattes 352 entourent la tête de fixation 355 et se bloquent en translation axiale et en rotation grâce à la protubérance 356 et aux surfaces plates 354 et 357 dont sont munies respectivement l'intérieur des pattes 352 et l'extérieur de la tête 355. De cette façon, le support 40 est solidaire du plateau 30 et peut être entraîné en rotation par ce dernier pour griller l'aliment 45.

Une fois l'aliment consommé (figure 21), l'utilisateur brise les pattes 352 au niveau de leurs zones de rupture 353 respectives, soit en tournant suffisamment fort le support 40 par rapport au plateau 30, soit par basculement du support 30, comme décrit précédemment. Ainsi, le support de cuisson 40 est désolidarisé de manière définitive du plateau inférieur 30 et ne peut plus être réutilisé. Bien entendu, la tête 355 reste intacte pour accueillir un nouveau support 40 muni de son aliment emmanché.

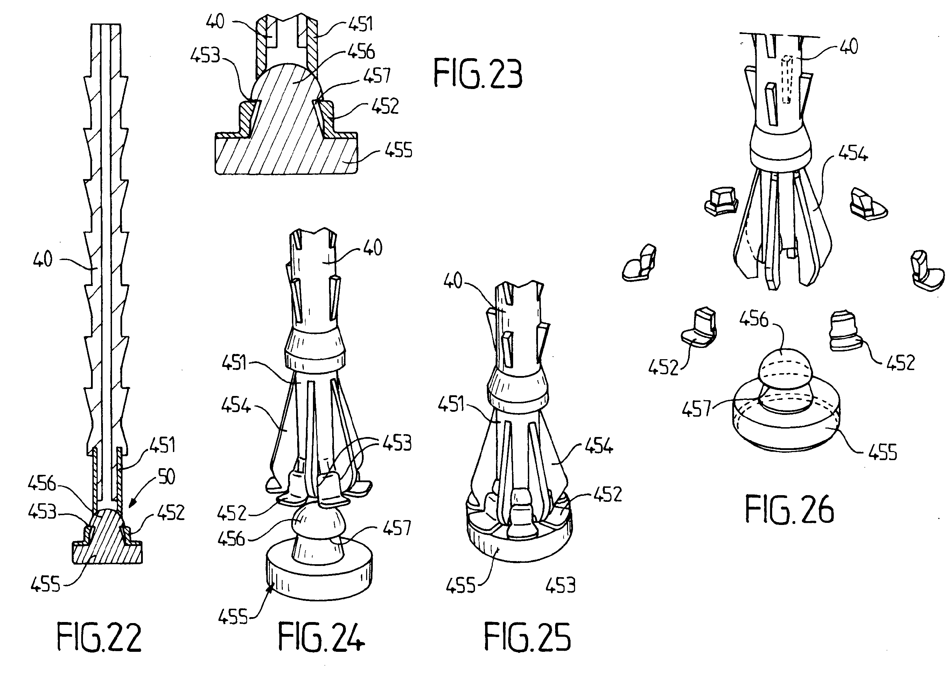

Les figures 22 à 26 illustrent un cinquième mode de réalisation des moyens de fixation destructibles 50. Ces moyens sont constitués par une collerette cylindrique creuse 451 disposée à une extrémité de fixation du support de cuisson 40 et dans le prolongement de ce dernier, ladite collerette 451 comportant une succession de lamelles radialement élastiques 452 disposées le long de sa circonférence, chaque lamelle 452 présentant, de part et d'autre, une zone sécable 453 permettant de la relier à deux pattes fixes adjacentes 454. Les moyens de fixation comportent en outre une tête de fixation 455 liée au plateau inférieur 30, ladite tête présentant une forme bombée 456 ayant un diamètre externe sensiblement égal au diamètre interne de la collerette 451 lorsque les lamelles 452 sont écartées, et une gorge 457 coopérant avec les extrémités libres des lamelles 452 afin d'assurer la liaison du support de cuisson 40 au plateau inférieur 30 pour l'utilisation de l'appareil.

Ainsi, en position montée (figures 22, 23 et 25), les lamelles 452 entourent la tête de fixation 455 et se bloque en translation axiale et en rotation grâce à la protubérance la gorge 457. De cette façon, le support 40 est solidaire du plateau 30 et peut être entraîné en rotation par ce dernier pour griller l'aliment 45.

Une fois l'aliment consommé (figure 26), l'utilisateur brise les lamelles 452 au niveau de leurs zones de rupture 453 par exemple par basculement du support 30. Ainsi, le support de cuisson 40 est désolidarisé de manière définitive du plateau inférieur 30 et ne peut plus être réutilisé. Bien entendu, la tête 455 reste intacte pour accueillir un nouveau support 40 muni de son aliment emmanché.

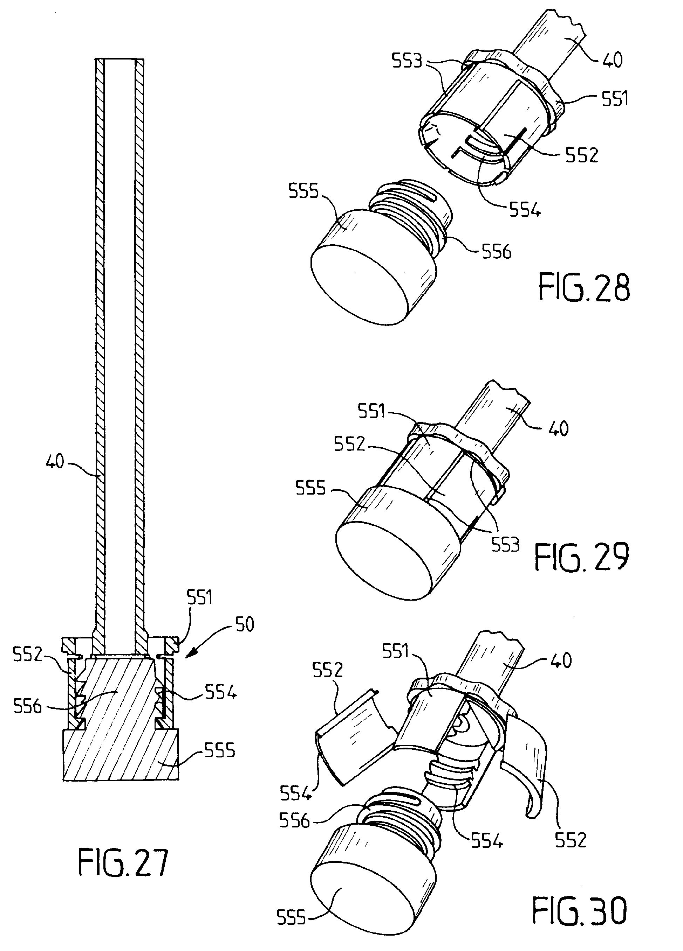

Les figures 27 à 30 illustrent un sixième mode de réalisation des moyens de fixation destructibles 50. Ces moyens sont constitués par :
- une collerette cylindrique creuse 551 disposée à une extrémité de fixation du support de cuisson 40 et dans le prolongement de ce dernier, ladite collerette 551 comportant une succession de lamelles radialement élastiques 552 disposées le long de sa circonférence et, intérieurement, un filetage 554, et
- une tête de fixation 555 liée au plateau inférieur 30, ladite tête 555 présentant un pas de vis 556 coopérant avec le filetage interne 554 de la collerette 551 afin d'assurer la liaison du support de cuisson 40 au plateau inférieur 30 pour l'utilisation de l'appareil.

Selon la présente invention, certaines au moins des lamelles 552, par exemple deux lamelles opposées sur les quatre présentes, comportent une zone sécable 553 permettant de désolidariser de manière définitive le support de cuisson 40 du plateau inférieur 30 par rupture desdites lamelles le long de la zone sécable 553, par exemple par traction ou flexion.

Ainsi, dans la position illustrée par les figures 27 et 29, le support 40 est fixé sur le plateau inférieur 30 tandis que dans la position illustrée par la figure 30, les lamelles 552 sont détachées de manière irréversible de la collerette 551 de sorte que le support 40 ne peut plus être utilisé de nouveau. L'utilisateur doit donc acheter une recharge neuve à installer sur le plateau 30 dès lors que la tête 555 reste intacte après la rupture de la zone sécable 553.

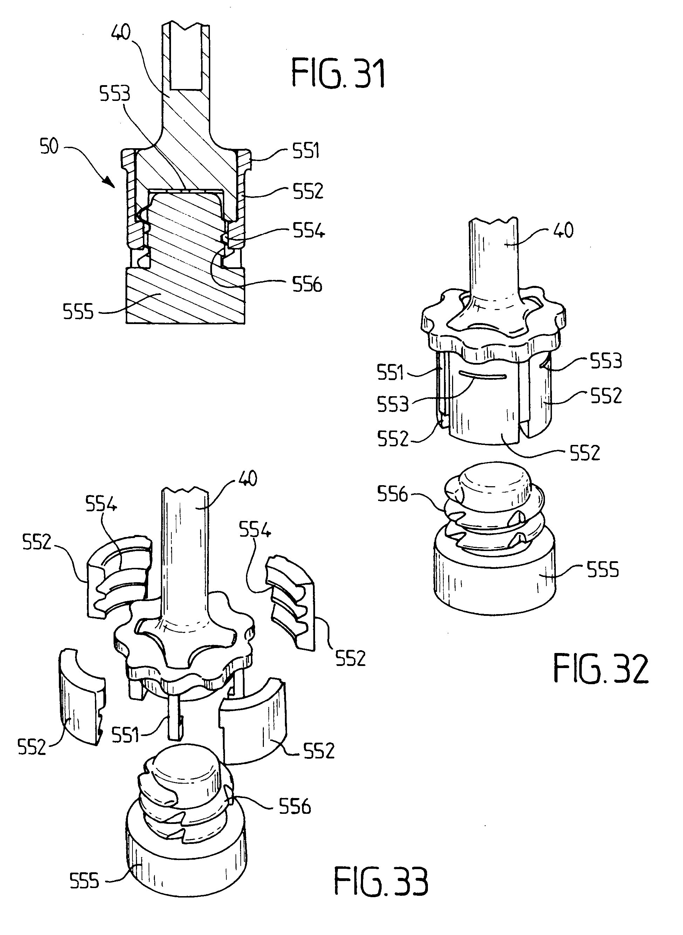

Selon une septième variante de réalisation illustrée par les figures 31 à 33, très proche de la précédente, toutes les lamelles 552 sont équipées d'une zone sécable 553 de sorte qu'elles se brisent ensemble lors de la première désolidarisation du support et du plateau.

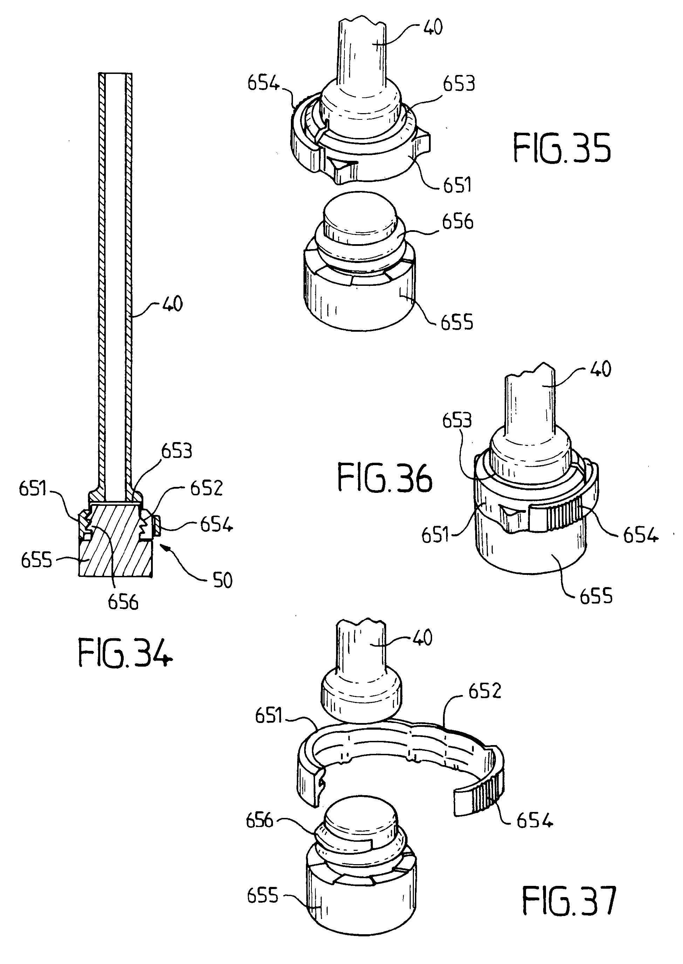

Les figures. 34 à 37 illustrent un huitième mode de réalisation des moyens de fixation destructibles 50. Ces moyens sont constitués par une bague 651 liée à une extrémité du support de cuisson 40 et comportant un filetage interne 652, et une tête de fixation 655 liée au plateau inférieur 30 et comportant un pas de vis 656 coopérant avec le filetage 652 de la bague 651 afin d'assurer la liaison du support de cuisson 40 au plateau inférieur 30 pour l'utilisation de l'appareil.

Avantageusement, la bague 651 présente une zone sécable 653 sur tout son pourtour supérieur et comporte une languette d'arrachage 654 permettant de désolidariser de manière définitive le support de cuisson 40 du plateau inférieur 30 par arrachage de ladite bague le long de la zone sécable 653 en tirant sur ladite languette 654, comme illustré sur la figure 37, rendant de ce fait le support 40 inutilisable après sa première utilisation.

Selon un autre aspect de la présente invention, le plateau inférieur 30 est également mobile en translation par rapport à la résistance 20 pour le rapprocher ou l'éloigner de cette dernière, avant la cuisson et/ou pendant la cuisson de l'aliment. Pour cela, il peut comporter un système manuel ou motorisé.

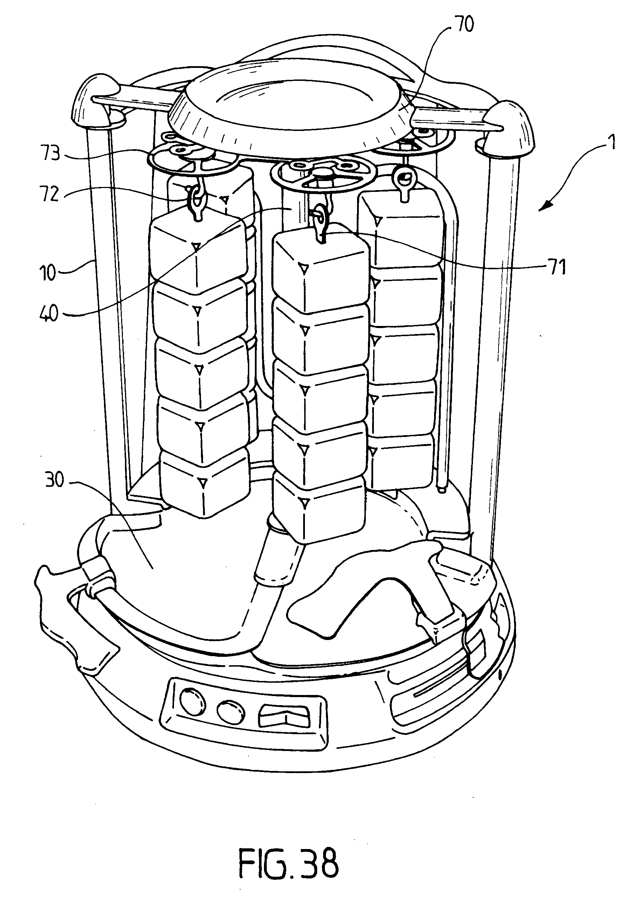

Comme cela est visible sur la figure 38, l'appareil 1 comporte en outre un plateau rotatif supérieur 70 relié au support de cuisson 40 et mobile en rotation simultanément avec ce dernier et le plateau inférieur 30. Ce plateau supérieur 70 est particulièrement bien adapté pour recevoir des brochettes verticales 71 relié à des crochets de suspension 72 montés eux-mêmes respectivement sur des tourniquets rotatifs 73, par exemple au nombre de quatre. Ainsi, la rotation du support 40 sur son axe provoque la rotation du plateau supérieur 70 simultanément à la rotation de chaque tourniquet 73 qui fait tourner la brochette 72 verticalement sur elle-même afin de griller chaque partie de l'aliment de manière optimisée.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, d'autres moyens de fixation destructibles sont envisageables dès lors qu'ils ne sortent pas de l'étendu de la protection de la présente invention.

Les aliments peuvent être de tous types, mélange de viande et légumes, volailles et légume, poisson et légume, fromage seul ou accompagné, dès lors qu'ils sont pré emmanchés sur un support neuf respectant les conditions d'hygiène requises, ledit support et l'aliment étant vendus de manière unitaire, par exemple sous vide, pour constituer une recharge « familiale » à usage unique.

## Revendications

1. Appareil domestique (1) pour la cuisson verticale d'un aliment, par exemple de la viande pour Kebab, comportant :
- un châssis externe de protection (10),
- une source de chaleur (20) s'étendant verticalement le long et à l'intérieur du châssis de protection lorsque l'appareil est posé à plat sur une surface de travail,
- un plateau inférieur (30) mobile au moins en rotation selon un axe parallèle à la source de chaleur,
- un support tubulaire vertical de cuisson (40) autour duquel un aliment (45) à réchauffer/cuire/griller est placé, le support de cuisson (40) et le plateau inférieur (30) comportant respectivement des moyens de fixation (50),
**caractérisé en ce que** lesdits moyens de fixation (50) sont adaptés pour être détruits de manière irréversible après leur première utilisation lors de la désolidarisation du support et du plateau, de sorte que le support de cuisson (40) est à usage unique et n'est positionnable qu'une seule fois sur le plateau inférieur (30).

2. Appareil de cuisson selon la revendication 1, **caractérisé en ce que** le support de cuisson (40) est constitué par un tube cylindrique formant une broche rotative.

3. Appareil de cuisson selon la revendication 1 ou 2, **caractérisé en ce que** les moyens de fixation (50) comportent au moins une zone sécable (60 ; 153 ; 253 ; 353 ; 453 ; 553 ; 653) adaptée pour séparer de manière définitive certains au moins desdits moyens de fixation (50) lors de la première désolidarisation entre le support de cuisson (40) et le plateau inférieur (30), par exemple par torsion, traction, compression, flexion ou toute autre force.

4. Appareil de cuisson selon la revendication 3, **caractérisé en ce que** les moyens de fixation (50) sont constitués par :
- une tige (51) liée à une extrémité de fixation du support de cuisson (40) et dans le prolongement axial de ce dernier, ladite tige (51) comportant une âme centrale (52) et deux pattes parallèles articulées (53) sur l'extrémité libre (52a) de ladite âme (52) pour pouvoir s'éloigner ou se rapprocher de cette dernière et former un tube, chaque patte (53) étant pourvue de protubérances radiales de clipage (54),
- un manchon de réception (55) lié au plateau inférieur et présentant une fente (56) et deux bras (57) sensiblement élastiques radialement définissant une ouverture de réception (58) de l'âme (52) et des pattes (53) de la tige (51), lesdits bras présentant intérieurement une gorge circulaire (59) coopérant avec les protubérances (54) des pattes (53) afin d'assurer la liaison du support de cuisson (40) au plateau inférieur (30) pour l'utilisation de l'appareil, et
- la tige (51) présentant une zone sécable (60) permettant de désolidariser de manière définitive les pattes articulées (53) d'une partie de l'âme (52) de la tige (51), par exemple par torsion et/ou traction de la tige (51) du support de cuisson (40) par rapport au manchon (55) du plateau inférieur (30).

5. Appareil de cuisson selon la revendication 3, **caractérisé en ce que** les moyens de fixation (50) sont constitués par :
- une collerette annulaire creuse (151) disposée à une extrémité de fixation du support de cuisson (40) et dans le prolongement axial de ce dernier, ladite collerette (151) comportant une succession de lamelles (152) radialement élastiques disposées le long de sa circonférence,
- une tête de fixation (155) liée au plateau inférieur (30), ladite tête (155) présentant une forme bombée (156) ayant un diamètre externe sensiblement égal au diamètre interne de la collerette (151) lorsque les lamelles (152) sont écartées de manière à coopérer avec ces dernières afin d'assurer la liaison du support de cuisson (40) au plateau inférieur (30) pour l'utilisation de l'appareil, et
- la collerette (151) présentant une zone sécable (153) et comportant une languette d'arrachage (154) permettant de désolidariser de manière définitive le support de cuisson (40) du plateau inférieur (30) par rupture desdites lamelles (152) le long de la zone sécable (153) en tirant sur ladite languette (154).

6. Appareil de cuisson selon la revendication 3, **caractérisé en ce que** les moyens de fixation (50) sont constitués par :
- un manchon tubulaire (251 ; 351) lié, par exemple par vissage ou sertissage, à une extrémité de fixation du support de cuisson (40) et comportant deux pattes parallèles élastiques (252 ; 352) délimitant entre elles un espace,
- une tête de fixation (255 ; 355) liée au plateau inférieur (30) et comportant une protubérance (256 ; 356) de forme complémentaire de l'espace défini entre les pattes (252 ; 352) de manière à coopérer avec ce dernier afin assurer la liaison du support de cuisson (40) au plateau inférieur (30) pour l'utilisation de l'appareil, et
- chaque patte (252 ; 352) comportant au moins une zone sécable (253 ; 353) permettant de désolidariser de manière définitive le support de cuisson (40) du plateau inférieur (30) par rupture desdites pattes (252 ; 352) le long de la zone sécable (253 ; 353), par exemple par torsion du manchon tubulaire (251 ; 351) par rapport à la tête de fixation (256 ; 356).

7. Appareil de cuisson selon la revendication 3, **caractérisé en ce que** les moyens de fixation (50) sont constitués par :
- une collerette cylindrique creuse (451) disposée à une extrémité de fixation du support de cuisson (40) et dans le prolongement de ce dernier, ladite collerette (451) comportant une succession de lamelles (452) radialement élastiques disposées le long de sa circonférence,
- une tête de fixation (455) liée au plateau inférieur (30), ladite tête (455) présentant une forme bombée (456) ayant un diamètre externe sensiblement égal au diamètre interne de la collerette (451) lorsque les lamelles (452) sont écartées de manière à coopérer avec ces dernières afin d'assurer la liaison du support de cuisson (40) au plateau inférieur (30) pour l'utilisation de l'appareil, et
- chaque lamelle (452) de la collerette (451) étant montée entre deux pattes fixes (454), au niveau d'une zone sécable (453) permettant de désolidariser de manière définitive le support de cuisson (40) du plateau inférieur (30) par rupture des lamelles (452) le long de ladite zone sécable (453), par exemple par traction ou flexion.

8. Appareil de cuisson selon la revendication 3, **caractérisé en ce que** les moyens de fixation (50) sont constitués par :
- une collerette cylindrique creuse (551) disposée à une extrémité de fixation du support de cuisson (40) et dans le prolongement de ce dernier, ladite collerette (551) comportant une succession de lamelles (552) radialement élastiques disposées le long de sa circonférence et, intérieurement, un filetage (554),
- une tête de fixation (555) liée au plateau inférieur (30), ladite tête (555) présentant un pas de vis (556) coopérant avec le filetage interne (554) de la collerette (551) afin d'assurer la liaison du support de cuisson (40) au plateau inférieur (30) pour l'utilisation de l'appareil, et
- certaines au moins des lamelles (552) présentant une zone sécable (553) permettant de désolidariser de manière définitive le support de cuisson (40) du plateau inférieur (30) par rupture desdites lamelles (552) le long de la zone sécable (553), par exemple par traction ou flexion.

9. Appareil de cuisson selon la revendication 3, **caractérisé en ce que** les moyens de fixation sont constitués par :
- une bague (651) liée à une extrémité de fixation du support de cuisson (40) et comportant un filetage interne (652),
- une tête de fixation (655) liée au plateau inférieur (30) et comportant un pas de vis (656) coopérant avec le filetage (652) de la bague (651) afin d'assurer la liaison du support de cuisson (40) au plateau inférieur (30) pour l'utilisation de l'appareil, et
- la bague (651) présentant une zone sécable (653) et comportant une languette d'arrachage (654) permettant de désolidariser de manière définitive le support de cuisson (40) du plateau inférieur (30) par arrachage de ladite bague (651) le long de la zone sécable (653) en tirant sur ladite languette (654).

10. Appareil de cuisson selon l'une quelconque des revendications précédentes, **caractérisé en ce que** le plateau inférieur (30) est également mobile en translation par rapport à la source de chaleur (20) pour le rapprocher ou l'éloigner de cette dernière, avant la cuisson et/ou pendant la cuisson de l'aliment (45).

11. Appareil de cuisson selon l'une quelconque des revendications précédentes, **caractérisé en ce qu'**il comporte en outre un plateau rotatif supérieur (70) relié au support de cuisson (40) et mobile en rotation simultanément avec ce dernier et le plateau inférieur (30), ledit plateau supérieur étant adapté pour recevoir des brochettes verticales (71).

12. Appareil selon l'une quelconque des revendications précédentes, **caractérisé en ce que** la source de chaleur (20) est une résistance électrique courbe décrivant au moins un arc de 90° autour du support de cuisson (40) et à puissance variable selon le type d'aliment à réchauffer/cuire/griller.

13. Support tubulaire (40) pour appareil de cuisson verticale (1), en particulier selon l'une quelconque des revendications précédentes, comportant des moyens de fixation (50) à un plateau (30) dudit appareil de cuisson, **caractérisé en ce que** lesdits moyens de fixation (50) sont destructible après première utilisation rendant ledit support (40) utilisable une seule fois et non repositionnable sur ledit plateau (30).

14. Support selon la revendication 13, **caractérisé en ce qu'**il est entouré d'un aliment (45) placée sous vide, en particulier de viande pour Kébab, de volaille, de poisson, de légumes ou encore de fromage, de manière à constituer une recharge consommable prête à être utilisée et pesant par exemple plusieurs centaines de grammes.

## Patentansprüche

1. Haushaltsgerät (1) zum vertikalen Garen eines Nahrungsmittels, zum Beispiel Kebabfleisch, mit
- einem äußeren Schutzgehäuse (10),
- einer Wärmequelle (20), die sich in vertikaler Richtung entlang und im Inneren des Schutzgehäuses erstreckt, wenn das Gerät flach auf eine Arbeitsfläche gestellt wird,
- einer unteren Platte (30), die zumindest in Drehung entlang einer Achse beweglich ist, die zu der Wärmequelle parallel ist,
- einer vertikalen rohrförmigen Garhalterung (40), um die herum ein zu erwärmendes/garendes/grillendes Nahrungsmittel (45) platziert ist, wobei die Garhalterung (40) und die untere Platte (30) jeweils Befestigungsmittel (50) aufweisen,
**dadurch gekennzeichnet, dass** die Befestigungsmittel (50) dafür geeignet sind, nach ihrer ersten Verwendung beim Lösen der Halterung und der Platte irreversibel zerstört zu werden, derart, dass die Garhalterung (40) zur einmaligen Verwendung bestimmt ist und nur ein einziges Mal auf der unteren Platte (30) angeordnet werden kann.

2. Gargerät nach Anspruch 1, **dadurch gekennzeichnet, dass** die Garhalterung (40) von einem zylindrischen Rohr gebildet ist, das eine Drehspindel bildet.

3. Gargerät nach Anspruch 1 oder 2, **dadurch gekennzeichnet, dass** die Befestigungsmittel (50) mindestens eine durchtrennbare Zone (60; 153; 253; 353; 453; 553; 653) aufweisen, die dafür geeignet ist, mindestens bestimmte der Befestigungsmittel (50) beim ersten Lösen, zum Beispiel durch Verdrehen, Ziehen, Zusammendrücken, Biegen oder jede andere Kraft, zwischen der Garhalterung (40) und der unteren Platte (30) auf endgültige Weise zu trennen.

4. Gargerät nach Anspruch 3, **dadurch gekennzeichnet, dass** die Befestigungsmittel (50) gebildet sind von
- einer Stange (51), die mit einem Befestigungsende der Garhalterung (40) und in der axialen Verlängerung Letzterer verbunden ist, wobei die Stange (51) einen mittleren Kern (52) und zwei parallele Laschen (53) aufweist, die an dem freien Ende (52a) des Kerns (52) angelenkt sind, um sich von diesem letzten weg oder zu diesem hin bewegen zu können und ein Rohr zu bilden, wobei jede Lasche (53) mit radialen Ausstülpungen zum Einrasten (54) versehen ist,
- einer Aufnahmehülse (55), die mit der unteren Platte verbunden ist und einen Schlitz (56) und zwei im Wesentlichen in radialer Richtung elastische Schenkel (57) aufweist, die eine Öffnung für die Aufnahme (58) des Kerns (52) und der Laschen (53) der Stange (51) festlegen, wobei die Schenkel innen eine kreisförmige Rille (59) aufweisen, die mit den Ausstülpungen (54) der Laschen (53) zusammenwirkt, um die Verbindung der Garhalterung (40) mit der unteren Platte (30) bei der Verwendung des Geräts zu bewirken, und
- wobei die Stange (51) eine durchtrennbare Zone (60) aufweist, die es ermöglicht, die angelenkten Laschen (53) von einem Teil des Kerns (52) der Stange (51) auf endgültige Weise zu lösen, zum Beispiel durch Verdrehen und/oder Ziehen der Stange (51) der Garhalterung (40) relativ zu der Hülse (55) der unteren Platte (30).

5. Gargerät nach Anspruch 3, **dadurch gekennzeichnet, dass** die Befestigungsmittel (50) gebildet sind von
- einem hohlen, ringförmigen Kragen (151), der an einem Befestigungsende der Garhalterung (40) und in der axialen Verlängerung Letzterer angeordnet ist, wobei der Kragen (151) eine Folge von Lamellen (152) aufweist, die in radialer Richtung elastisch entlang seines Umfangs angeordnet sind,
- einem Befestigungskopf (155), der mit der unteren Platte (30) verbunden ist, wobei der Kopf (155) eine gewölbte Form (156) mit einem Außendurchmesser aufweist, der im Wesentlichen gleich dem Innendurchmesser des Kragens (151) ist, wenn die Lamellen (152) aufgespreizt sind, derart, dass er mit diesen letzten zusammenwirkt, um die Verbindung der Garhalterung (40) mit der unteren Platte (30) bei der Verwendung des Geräts zu bewirken, und
- wobei der Kragen (151) eine durchtrennbare Zone (153) aufweist und eine Aufreisszunge (154) aufweist, die es ermöglicht, die Garhalterung (40) auf endgültige Weise von der unteren Platte (30) durch Durchbrechen der Lamellen (152) entlang der durchtrennbaren Zone (153) zu lösen, indem an der Zunge (154) gezogen wird.

6. Gargerät nach Anspruch 3, **dadurch gekennzeichnet, dass** die Befestigungsmittel (50) gebildet sind von
- einer rohrförmigen Hülse (251; 351), die, zum Beispiel durch Verschrauben oder Aufquetschen, mit einem Befestigungsende der Garhalterung (40) verbunden ist und zwei parallele elastische Laschen (252; 352) aufweist, die zwischen einander einen Spalt begrenzen,
- einem Befestigungskopf (255; 355), der mit der unteren Platte (30) verbunden ist und eine Ausstülpung (256; 356) aufweist, deren Form zu dem zwischen den Laschen (252; 352) gebildeten Spalt komplementär ist, derart, dass sie mit diesem zusammenwirkt, um die Verbindung der Garhalterung (40) mit der unteren Platte (30) bei der Verwendung des Geräts zu bewirken, und
- wobei jede Lasche (252; 352) mindestens eine durchtrennbare Zone (253; 353) aufweist, die es ermöglicht, die Garhalterung (40) auf endgültige Weise von der unteren Platte (30) durch Durchbrechen der Laschen (252; 352) entlang der durchtrennbaren Zone (253; 353) zu lösen, zum Beispiel durch Verdrehen der rohrförmigen Hülse (251; 351) relativ zu dem Befestigungskopf (256; 356).

7. Gargerät nach Anspruch 3, **dadurch gekennzeichnet, dass** die Befestigungsmittel (50) gebildet sind von
- einem hohlen, zylindrischen Kragen (451), der an einem Befestigungsende der Garhalterung (40) und in der Verlängerung Letzterer angeordnet ist, wobei der Kragen (451) eine Folge von Lamellen (452) aufweist, die in radialer Richtung elastisch entlang seines Umfangs angeordnet sind,
- einem Befestigungskopf (455), der mit der unteren Platte (30) verbunden ist, wobei der Kopf (455) eine gewölbte Form (456) mit einem Außendurchmesser aufweist, der im Wesentlichen gleich dem Innendurchmesser des Kragens (451) ist, wenn die Lamellen (452) aufgespreizt sind, derart, dass er mit Letzteren zusammenwirkt, um die Verbindung der Garhalterung (40) mit der unteren Platte (30) bei der Verwendung des Geräts zu bewirken, und
- wobei jede Lamelle (452) des Kragens (451) zwischen zwei festen Laschen (454) montiert ist, im Bereich einer durchtrennbaren Zone (453), die es ermöglicht, die Garhalterung (40) auf endgültige Weise von der unteren Platte (30) durch Durchbrechen der Lamellen (452) entlang der durchtrennbaren Zone (453) zu lösen, zum Beispiel durch Ziehen oder Biegen.

8. Gargerät nach Anspruch 3, **dadurch gekennzeichnet, dass** die Befestigungsmittel (50) gebildet sind von
- einem hohlen, zylindrischen Kragen (551), der an einem Befestigungsende der Garhalterung (40) und in der Verlängerung Letzterer angeordnet ist, wobei der Kragen (551) eine Folge von Lamellen (552) aufweist, die in radialer Richtung elastisch entlang seines Umfangs angeordnet sind, und, innen, ein Gewinde (554) aufweist,
- einem Befestigungskopf (555), der mit der unteren Platte (30) verbunden ist, wobei der Kopf (555) einen Schraubengang (556) aufweist, der mit dem Innengewinde (554) des Kragens (551) zusammenwirkt, um die Verbindung der Garhalterung (40) mit der unteren Platte (30) bei der Verwendung des Geräts sicherzustellen, und
- wobei bestimmte der Lamellen (552) eine durchtrennbare Zone (553) aufweisen, die es ermöglicht, die Garhalterung (40) auf endgültige Weise von der unteren Platte (30) durch Durchbrechen der Lamellen (552) entlang der durchtrennbaren Zone (553) zu lösen, zum Beispiel durch Ziehen oder Biegen.

9. Gargerät nach Anspruch 3, **dadurch gekennzeichnet, dass** die Befestigungsmittel gebildet sind von
- einem Ring (651), der mit einem Befestigungsende der Garhalterung (40) verbunden ist und ein Innengewinde (652) aufweist,
- einem Befestigungskopf (655), der mit der unteren Platte (30) verbunden ist und einen Schraubengang (656) aufweist, der mit dem Innengewinde (652) des Rings (651) zusammenwirkt, um die Verbindung der Garhalterung (40) mit der unteren Platte (30) bei der Verwendung des Geräts zu bewirken, und
- wobei der Ring (651) eine durchtrennbare Zone (653) aufweist und eine Aufreisszunge (654) aufweist, die es ermöglicht, die Garhalterung (40) auf endgültige Weise von der unteren Platte (30) durch Aufreissen des Rings (651) entlang der durchtrennbaren Zone (653) zu lösen, indem an der Zunge (654) gezogen wird.

10. Gargerät nach einem der vorhergehenden Ansprüche, **dadurch gekennzeichnet, dass** die untere Platte (30) auch relativ zu der Wärmequelle (20) in Translation beweglich ist, um sie vor dem Garen und/oder während des Garens des Nahrungsmittels (45) zu Letzterer hin oder von ihr weg zu bewegen.

11. Gargerät nach einem der vorhergehenden Ansprüche, **dadurch gekennzeichnet, dass** es ferner eine obere Drehplatte (70) aufweist, die mit der Garhalterung (40) verbunden ist und gleichzeitig mit Letzterer und der unteren Platte (30) drehbeweglich ist, wobei die obere Platte für die Aufnahme von vertikalen Spießen (71) geeignet ist.

12. Gerät nach einem der vorhergehenden Ansprüche, **dadurch gekennzeichnet, dass** die Wärmequelle (20) ein gekrümmter elektrischer Widerstand ist, der mindestens einen Bogen von 90° um die Garhalterung (40) beschreibt und eine Leistung hat, die je nach Typ des zu erwärmenden/garenden/grillenden Nahrungsmittels veränderbar ist.

13. Rohrförmige Halterung (40) für ein Gerät zum vertikalen Garen (1), insbesondere nach einem der vorhergehenden Ansprüche, die Mittel zum Befestigen (50) des Gargeräts an einer Platte (30) aufweist, **dadurch gekennzeichnet, dass** die Befestigungsmittel (50) nach Erstverwendung zerstörbar sind, wodurch sie die Halterung (40) ein einziges Mal verwendbar und nicht erneut auf der Platte (30) positionierbar machen.

14. Halterung nach Anspruch 13, **dadurch gekennzeichnet, dass** sie ein unter Vakuum platziertes Nahrungsmittel (45), insbesondere Kebabfleisch, Geflügel, Fisch, Gemüse oder auch Käse, umgibt, derart, dass sie eine verzehrbare Nachfüllung bildet, die gebrauchsfertig ist und zum Beispiel mehrere Hundert Gramm wiegt.

## Claims

1. Domestic appliance (1) for the vertical cooking of a foodstuff, for example meat for kebab, having:
- an external protective frame (10),
- a heat source (20) that extends vertically along and inside the protective frame when the appliance is positioned flat on a work surface,
- a bottom plate (30) that is able to move at least in rotation about an axis parallel to the heat source,
- a vertical tubular cooking support (40) about which a foodstuff (45) to be heated/cooked/grilled is positioned, the cooking support (40) and the bottom plate (30) each having securing means (50),
**characterized in that** said securing means (50) are designed to be irreversibly destroyed after their first use, when the support and the plate are disconnected, such that the cooking support (40) is a single use cooking support and is able to be positioned on the bottom plate (30) only once.

2. Cooking appliance according to Claim 1, **characterized in that** the cooking support (40) is formed by a cylindrical tube that forms a rotating spit.

3. Cooking appliance according to Claim 1 or 2, **characterized in that** the securing means (50) have at least one breakable zone (60; 153; 253; 353; 453; 553; 653) that is designed to definitively separate at least some of said securing means (50) when the cooking support (40) and the bottom plate (30) are disconnected for the first time, for example by twisting, pulling, compression, bending or any other force.

4. Cooking appliance according to Claim 3, **characterized in that** the securing means (50) are formed by:
- a rod (51) that is connected to a securing end of the cooking support (40) and axially extends the latter, said rod (51) having a central core (52) and two articulated parallel lugs (53) at the free end (52a) of said core (52) in order to be able to move away from or towards the latter and to form a tube, each lug (53) being provided with radial clip-fastening protuberances (54),
- a receiving sleeve (55) that is connected to the bottom plate and has a slot (56) and two substantially resilient arms (57) that radially define a receiving opening (58) for the core (52) and the lugs (53) of the rod (51), said arms internally having a circular groove (59) that engages with the protuberances (54) on the lugs (53) so as to connect the cooking support (40) to the bottom plate (30) in order to use the appliance, and
- the rod (51) having a breakable zone (60) for definitively disconnecting the articulated lugs (53) from a part of the core (52) of the rod (51), for example by twisting and/or pulling the rod (51) of the cooking support (40) with respect to the sleeve (55) of the bottom plate (30).

5. Cooking appliance according to Claim 3, **characterized in that** the securing means (50) are formed by:
- a hollow annular collar (151) that is disposed at a securing end of the cooking support (40) and axially extends the latter, said collar (151) having a succession of radially resilient tongues (152) disposed around its circumference,
- a securing head (155) that is connected to the bottom plate (30), said head (155) having a domed shape (156) with an outside diameter approximately equal to the inside diameter of the collar (151) when the tongues (152) are spaced apart, so as to engage with the latter in order to connect the cooking support (40) to the bottom plate (30) in order to use the appliance, and
- the collar (151) having a breakable zone (153) provided with a pull tab (154) for definitively disconnecting the cooking support (40) from the bottom plate (30) by breaking said tongues (152) along the breakable zone (153) by pulling on said tab (154).

6. Cooking appliance according to Claim 3, **characterized in that** the securing means (50) are formed by:
- a tubular sleeve (251; 351) that is connected, for example by screwing or crimping, to a securing end of the cooking support (40) and has two resilient parallel lugs (252; 352) that delimit a space between one another,
- a securing head (255; 355) that is connected to the bottom plate (30) and has a protuberance (256; 356) with a shape complementary to the space defined between the lugs (252; 352), so as to engage with the latter in order to connect the cooking support (40) to the bottom plate (30) in order to use the appliance, and
- each lug (252; 352) having at least one breakable zone (253; 353) for definitively disconnecting the cooking support (40) from the bottom plate (30) by breaking said lugs (252; 352) along the breakable zone (253; 353), for example by pulling the tubular sleeve (251; 351) with respect to the securing head (256; 356).

7. Cooking appliance according to Claim 3, **characterized in that** the securing means (50) are formed by:
- a hollow cylindrical collar (451) that is disposed at a securing end of the cooking support (40) and extends the latter, said collar (451) having a succession of radially resilient tongues (452) disposed around its circumference,
- a securing head (455) that is connected to the bottom plate (30), said head (455) having a domed shape (456) with an outside diameter approximately equal to the inside diameter of the collar (451) when the tongues (452) are spaced apart, so as to engage with the latter in order to connect the cooking support (40) to the bottom plate (30) in order to use the appliance, and
- each tongue (452) of the collar (451) being mounted between two fixed lugs (454), in the region of a breakable zone (453) for definitively disconnecting the cooking support (40) from the bottom plate (30) by breaking the tongues (452) along said breakable zone (453), for example by pulling or bending.

8. Cooking appliance according to Claim 3, **characterized in that** the securing means (50) are formed by:
- a hollow cylindrical collar (551) that is disposed at a securing end of the cooking support (40) and extends the latter, said collar (551) having a succession of radially resilient tongues (552) disposed around its circumference and, internally, a thread (554),
- a securing head (555) that is connected to the bottom plate (30), said head (555) having a screw pitch (556) that engages with the internal thread (554) in the collar (551) in order to connect the cooking support (40) to the bottom plate (30) in order to use the appliance, and
- at least some of the tongues (552) having a breakable zone (553) for definitively disconnecting the cooking support (40) from the bottom plate (30) by breaking said tongues (552) along the breakable zone (553), for example by pulling or bending.

9. Cooking appliance according to Claim 3, **characterized in that** the securing means are formed by:
- a ring (651) that is connected to a securing end of the cooking support (40) and has an internal thread (652),
- a securing head (655) that is connected to the bottom plate (30) and has a screw pitch (656) that engages with the thread (652) in the ring (651) in order to connect the cooking support (40) to the bottom plate (30) in order to use the appliance, and
- the ring (651) having a breakable zone (653) and having a pull tab (654) for definitively disconnecting the cooking support (40) from the bottom plate (30) by tearing said ring (651) along the breakable zone (653) by pulling on said tab (654).

10. Cooking appliance according to any one of the preceding claims, **characterized in that** the bottom plate (30) is also able to move in translation with respect to the heat source (20) in order to move it towards or away from the latter, before and/or while the foodstuff (45) is being cooked.

11. Cooking appliance according to any one of the preceding claims, **characterized in that** it also has a top rotary plate (70) that is connected to the cooking support (40) and is able to rotate simultaneously with the latter and the bottom plate (30), said top plate being designed to receive vertical skewers (71).

12. Appliance according to any one of the preceding claims, **characterized in that** the heat source (20) is a curved electrical resistor that describes at least an arc of 90° around the cooking support (40) and has a variable power depending on the type of foodstuff to be heated/cooked/grilled.

13. Tubular support (40) for a vertical cooking appliance (1), in particular according to any one of the preceding claims, having securing means (50) for securing to a plate (30) of said cooking appliance, **characterized in that** said securing means (50) are destructible after first use, such that said support (40) is usable only once and is not repositionable on said plate (30).

14. Support according to Claim 13, **characterized in that** it is surrounded by a foodstuff (45) placed under vacuum, in particular meat for kebab, poultry, fish, vegetables or cheese, so as to form a consumable refill that is ready to be used and weighs for example several hundred grams.
